Europäisches Patentamt

European Patent Office

Office européen des brevets

(11) Publication number: **0 040 217**
**B1**

(12) **EUROPEAN PATENT SPECIFICATION**

(45) Date of publication of patent specification: **13.03.85**

(51) Int. Cl.⁴: **H 04 B 3/36, H 03 H 7/30**

(21) Application number: **80902200.7**

(22) Date of filing: **25.09.80**

(86) International application number:
**PCT/US80/01245**

(87) International publication number:
**WO 81/01089 16.04.81 Gazette 81/09**

(54) **APPARATUS FOR AND METHOD OF PROCESSING DATA SIGNALS.**

(30) Priority: **15.10.79 US 84857**

(43) Date of publication of application:
**25.11.81 Bulletin 81/47**

(45) Publication of the grant of the patent:
**13.03.85 Bulletin 85/11**

(84) Designated Contracting States:
**DE FR GB**

(56) References cited:
**WO-A-80/01863**
**US-A-3 898 564**
**US-A-3 974 449**
**US-A-4 227 152**

**IEEE TRANSACTIONS ON COMMUNICATIONS,
vol. COM-24, no. 8, August 1976 New York, US
G. UNGERBOECK "Fractional tapspacing
equalizer and consequences for clock recovery
in data modems", pages 856-864**

(73) Proprietor: **Western Electric Company,
Incorporated
222 Broadway
New York, NY 10038 (US)**

(72) Inventor: **WERNER, Jean Jacques
56 Wedgewood Circle
Eatontown, NJ 07724 (US)**

(74) Representative: **Buckley, Christopher Simon
Thirsk et al
Western Electric Company Limited 5
Mornington Road
Woodford Green Essex IG8 OTU (GB)**

Courier Press, Leamington Spa, England.

## Description

The present invention relates to apparatus for and method of processing data signals.

Automatic equalizers are necessary for accurate reception of high-speed data signals transmitted over band-limited channels with unknown transmission characteristics. The equalizer is generally in the form of a transversal filter in which samples of the incoming data signal are multiplied by respective tap coefficients. The resulting products are added together to generate an equalizer output which is then demodulated and/or quantized to recover the transmitted data. In addition, an error signal is formed equal to the difference between the equalizer output and a reference signal which represents the transmitted data symbol. The value of the symbol that was transmitted may be known at the receiver a priori, as is the case in many equalizer start-up arrangements. Alternatively, as in the so-called adaptive type of automatic equalizer, the reference signal is derived from the decision made in the receiver (on the basis of the equalized signal value) as to what data symbol was transmitted. In either case, the error signal is used to update the tap coefficient values in such a way as to minimize a measure of the distortion—primarily intersymbol interference—introduced by the channel. The most commonly used error-directed coefficient updating algorithm is the so-called mean-squared error algorithm, which adjusts the tap coefficients so as to minimize the average of the value of the square of the error signal.

Most commercial data receivers, e.g. data modems, incorporate a synchronous, or baud, equalizer in which the received data signal is sampled at a rate equal to the symbol rate. It is, however, possible to use a so-called fractionally spaced equalizer in which the received signal is sampled at a higher rate. Data decisions, i.e., quantizations of the equalizer outputs, are still made at the symbol rate. However, the fact that equalization is carried out using a finer sampling interval provides the fractionally spaced equalizer with significant advantages over the more conventional type of equalizer. Most notable among these is insensitivity to channel delay distortion, including sampling phase errors.

There is, however, at least one significant problem unique to the fractionally spaced equalizer. In a synchronous equalizer, one set of tap coefficients is clearly optimum, i.e., provides the smallest mean-squared error. By contrast, many sets of coefficient values provide approximately the same mean-squared error in the fractionally spaced equalizer. As a consequence of this property, the presence of small biases in the coefficient updating processing hardware—such as biases associated with signal value round-off—can cause at least some of the coefficient values to drift to very large levels, or "blow up," even though the mean-squared error remains at, or close to, its minimum value. The registers used to store the coefficients or other signals generated during normal equalizer operation can then overflow, causing severe degradation, or total collapse, of the system response.

The prior art—emplified by G. Ungerboeck, "Fractional Tap-Spacing Equalizers and Consequences for Clock Recovery for Data Modems," *IEEE Trans. on Communications*, Vol. COM-24, No. 8, August 1976, pp. 856—864—suggests that the coefficient drift can be controlled by introducing one of two alternative auxiliary terms into the conventional updating algorithm. The auxiliary term may be, for example, a predetermined small fraction of the current value of the coefficient being updated. This implements a so-called tap leakage approach. Alternatively, a spectral zero-forcing approach is suggested. Here, the auxiliary term is a predetermined small fraction of an alternating-sign sum of the current values of all the coefficients.

These approaches, while providing an upper limit for the coefficient values, are not wholly satisfactory from other standpoints. For example, it is desirable in any transversal filter type of automatic equalizer to have as many of the coefficient values at or as close to zero as possible. This means that the numerical computations associated with coefficient updating will involve the manipulation and storage of smaller numbers than would otherwise be the case. This, in turn, minimizes the complexity and expense of the computational hardware. In addition, keeping as many of the coefficient values at or as close to zero as possible best conditions the system to withstand the effects of, and to recover from, phase hits and other transmission disturbances. The above-described approaches for dealing with coefficient drift, while providing an upper limit for the co-efficient values, allow a large number of the coefficients to assume values which are not at or close to zero. Thus, system performance suffers.

A more efficacious technique for controlling coefficient drift is taught in the PCT-document WO—A—80/01863 (publication data: 4.9.1980). As in Ungerboeck, a tap leakage term is introduced into the coefficient updating algorithm. Here, however, the magnitude of the tap leakage term is independent of any coefficient value; it is illustratively a constant. This approach has been found to substantially avoid the above-outlined drawbacks of the Ungerboeck approach.

On the other hand, the tap leakage of WO—A—80/01863 (like Ungerboeck) necessarily introduces a certain amount of noise into the equalization process inasmuch as it changes the coefficients from the values which the error-directed algorithm specifies. This has not been found to be a significant effect in, for example, the so-called T/2 equalizer which receives two line samples per symbol interval. However, T/p equalizers, p>2, tend to exhibit greater tendency toward tap coefficient drifting. This necessitates increasing the magnitude of the tap leakage term, introducing further noise in the equalization process and thereby increasing the likelihood of an incorrect data decision.

This invention seeks to control coefficient drift in fractionally spaced equalizers while minimally affecting the accuracy of the equalization process itself.

According to one aspect of this invention apparatus for processing a data signal received over a band-limited transmission channel and representing a succession of data signal values occurring at T second intervals includes means for forming a sampled signal comprising a succession of samples occurring at a predetermined rate of p/T samples per second, p>1, the sampled signal including energy derived from the received data signal distributed in a plurality of frequency bands, means for equalizing the sampled signal, means for recovering the data signal values from the output of the equalizing means, and means for repetitively updating the response of the equalizing means, and is characterised by means for introducing another signal to provide in the sampled signal energy at frequencies intermediate the said frequency bands to reduce coefficient drift in the equalizing means.

According to another aspect of this invention there is provided a method of processing a data signal received over a band-limited transmission channel and representing a succession of data signal values occurring at T second intervals, the method including forming a sampled signal comprising a succession of samples occurring at a predetermined rate of p/T samples per second, p>1, the sampled signal including energy derived from the received data signal distributed in a plurality of frequency bands, equalizing the sampled signal in an equalizer, recovering the data signal values from the equalized sampled signal, and repetitively updating the response of the equalizer, and is characterised in that another signal is introduced to provide in the sampled signal energy at frequencies intermediate the said frequency bands to reduce coefficient drift in the equalizer.

In this invention, energy is provided in the sampled signal at frequencies at which the sampled channel transfer function has substantially zero gain. This forces the equalizer to have a unique transfer function, and, thus, a unique set of coefficient values for the channel being equalized. The coefficient drift problem is thus substantially eliminated.

The provided energy can be in any of numerous forms. However, excellent results are obtained when it is in the form of one or more sweeping sinusoids.

The invention will now be described by way of example with reference to the accompanying drawings, in which:

Fig. 1 is a block diagram of a data receiver including circuitry embodying the invention;

Figs. 2—5 are signal amplitude vs. frequency plots helpful in explaining the operation of baud-sampled equalizers;

Figs. 6—10 are signal amplitude vs. frequency plots helpful in explaining the operation of fractionally spaced equalizers and, in particular, the coefficient drift phenomenon; and

Figs. 11—13 are signal amplitude vs. frequency plots depicting several forms for the signal energy added to the received data signal.

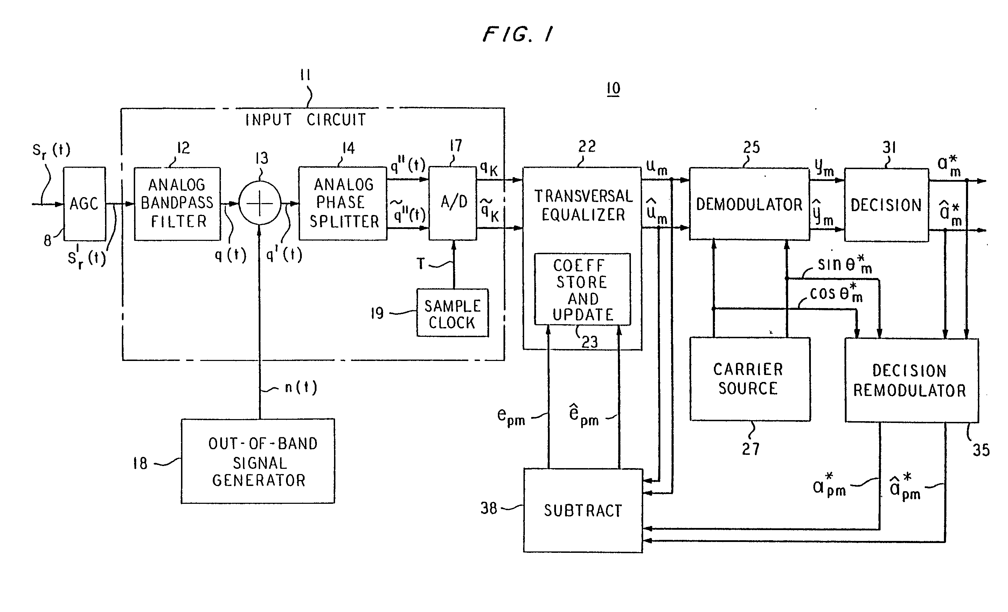

Fig. 1 depicts a receiver 10 for data signals transmitted from a transmitter (not shown) over a bandlimited channel, e.g., voiceband telephone circuit. The data signals are illustratively quadrature amplitude modulated (QAM) data signals wherein four paralleled information bits are transmitted during each of a succession of symbol intervals of duration T. The symbol rate is thus 1/T, yielding a binary transmission rate of 4/T bits per second. During each symbol interval, the four bits to be transmitted are encoded into two signal levels each of which can take on one of the four values $[+1, -1, +3, -3]$. The two signal levels transmitted during the $m^{th}$ symbol interval comprise data symbol $A_m$—a complex quantity having real and imaginary components $a_m$ and $â_m$, respectively. Components $a_m$ $â_m$, in turn, amplitude modulate respective 1800 Hz in-phase and quadrature-phase carrier waves. The modulated signals, when added together, form a QAM signal s(t) of the form

$$s(t) = Re[\Sigma_m A_m g(t-mT) e^{j\omega_c t}]$$

where g(t) is a real function and $\omega_c$ is the radian carrier frequency. Signal s(t) is then transmitted to receiver 10.

In receiver 10, the received QAM signal $s_r(t)$ passes through automatic gain control circuit 8 where it emerges as signal $s'_r(t)$. The latter is applied to an input circuit 11 and, more particularly, to analog bandpass filter 12 thereof. The function of filter 12 is to filter out any energy in signal $s'_r(t)$ outside the transmission band of interest—in this example the band 300—3000 Hz. In accordance with the present invention, the output signal q(t) of filter 12 is added in an adder 13 to a signal n(t) generated by out-of-band signal generator 18. Signal n(t) is discussed in more detail hereinbelow.

Input circuit 11 further includes a phase splitter 14, a sampler in the form of an analog-to-digital (a/d) converter 17 and sample clock 19. Phase splitter 14 responds to the output signal q'(t) of adder 13 to generate two versions of signal g'(t). One of these is q''(t), which may be identical to q'(t) or may be a phase-shifted version of it. The other, represented as $\tilde{q}''(t)$, is the Hilbert transform of q''(t). Signals

q''(t) and $\tilde{q}''$(t) may be regarded as the real and imaginary components of a complex signal Q''(t).

Signals q''(t) and $\tilde{q}''$(t) are passed to a/d converter 17. The latter is operated by clock 19 p times per symbol interval to generate a sampled signal in the form of equalizer input samples $q_k$ and $\tilde{q}_k$, k=1, 2 ... of signals q''(t) and $\tilde{q}''$(t). Equalizer input samples $q_k$ and $\tilde{q}_k$ may be thought of as components of a complex equalizer input sample $Q_k$.

Equalizer input sample components $q_k$ and $\tilde{q}_k$ pass on to transversal filter equalizer 22. The latter generates an output once every T seconds. In particular, the output of equalizer 22 during the $m^{th}$ receiver symbol interval of duration T is complex pass-band equalizer output $U_m$ having components $u_m$ and $\hat{u}_m$. Equalizer 22 generates its outputs by forming linear combinations of the equalizer input sample components in accordance with the relations

$$u_m = c_m^T r_m + d_m^T \hat{r}_m$$

$$\hat{u}_m = c_m^T \hat{r}_m - d_m^T r_m$$

In these expressions $r_m$ and $\hat{r}_m$ are (N×1) matrices, or vectors, respectively comprising the N most recent real and imaginary equalizer input sample components, N being a selected integer. That is

$$r_m = \begin{bmatrix} q_k \\ q_{k-1} \\ . \\ . \\ . \\ q_{k-(N-1)} \end{bmatrix} \quad \text{and} \quad \hat{r}_m = \begin{bmatrix} \hat{q}_k \\ \hat{q}_{k-1} \\ . \\ . \\ . \\ \hat{q}_{k-(N-1)} \end{bmatrix}$$

In addition, $c_m$ and $d_m$ are (N×1) vectors each comprising an ensemble of N tap coefficients having values associated with the $m^{th}$ receiver interval. (The superscript "T" used in the above expressions indicates the matrix transpose operation wherein the (N×1) vectors $c_m$ and $d_m$ are transported into (1×N) vectors for purposes of matrix multiplication). The values of the coefficients in these vectors are determined in the manner described below. Vectors $c_m$ and $d_m$ may be thought of as the real and imaginary components of a complex coefficient $C_m$.

Passband equalizer output $U_m$ is demodulated by demodulator 25 to yield baseband equalizer output $Y_m$. The latter and passband equalizer output $U_m$ respectively represent baseband and pass-band versions of transmitted symbol $A_m$. Baseband equalizer output $Y_m$ has real and imaginary components $y_m$ and $\hat{y}_m$, the demodulation process being expressed as

$$y_m = u_m \cos \theta_m^* + \hat{u}_m \sin \theta_m^*$$

$$\hat{y}_m = u_m \sin \theta_m^* + \hat{u}_m \cos \theta_m^*,$$

$\theta_m^*$ being an estimate of the current carrier phase. For purposes of generating $y_m$ and $\hat{y}_m$ in accordance with the above expressions, demodulator 25 receives representations of cos $\theta_m^*$ and sin $\theta_m^*$ from a carrier source 27.

Baseband output $Y_m$ is quantized in decision circuit 31. The resulting output $A_m^*$ is a decision as to the value of the transmitted symbol $A_m$. In particular the real and imaginary parts of $A_m^*$, $a_m^*$ and $\hat{a}_m^*$ are decisions as to the data signal values represented by the real and imaginary components $a_m$ and $\hat{a}_m$ of transmitted symbol $A_m$. Decision circuit 31, more particularly, forms decision $a_m^*(\hat{a}_m^*)$ by identifying the one of the four possible data signal values [+1, −1, +3, −3] which is closest to the value of baseband output component $y_m(\hat{y}_m)$.

Decision $A_m^*$ is also used to generate an error signal for use in updating coefficient vectors $c_m$ and $d_m$. In particular, decision components $a_m^*$ and $\hat{a}_m^*$ are combined in decision remodulator 35 with sin $\theta_m^*$ and cos $\theta_m^*$ from carrier source 27 to form remodulated, or passband, decision $A_{pm}^*$. The real and imaginary components of $A_{pm}^*$, $a_{pm}^*$ and $\hat{a}_{pm}^*$ are formed in accordance with

$$a_{pm}^* = a_m^* \cos \theta_m^* - \hat{a}_m^* \sin \theta_m^*$$

$$\hat{a}_{pm}^* = a_m^* \sin \theta_m^* + \hat{a}_m^* \cos \theta_m^*.$$

Pass band decision $A_{pm}^*$ is subtracted from passband equalizer output $U_m$ in subtractor 38 to yield passband error $E_{pm}$ having components $e_{pm}$ and $\hat{e}_{pm}$ given by

$$e_{pm} = u_m - a_{pm}^*$$

$$\hat{e}_{pm} = \hat{u}_m - \hat{a}_{pm}^*$$

Error signal components $e_{pm}$ and $\hat{e}_{pm}$ are extended to coefficient store and update unit 23 within equalizer 22 for purposes of updating the values of the coefficients in coefficient vectors $c_m$ and $d_m$ in preparation for the next, $(m+1)^{st}$, symbol interval. The so-called mean-squared error stochastic updating algorithm is illustratively used, yielding the updating rules

$$c_{m+1} = c_m - \alpha[r_m e_{pm} + \hat{r}_m \hat{e}_{pm}]$$

$$d_{m+1} = d_m - \alpha[\hat{r}_m e_{pm} - r_m \hat{e}_{pm}],$$

$\alpha$ being a predetermined constant. These rules can be written in complex notation as

$$C_{m+1} = C_m - \alpha R_k E_{pm}.$$

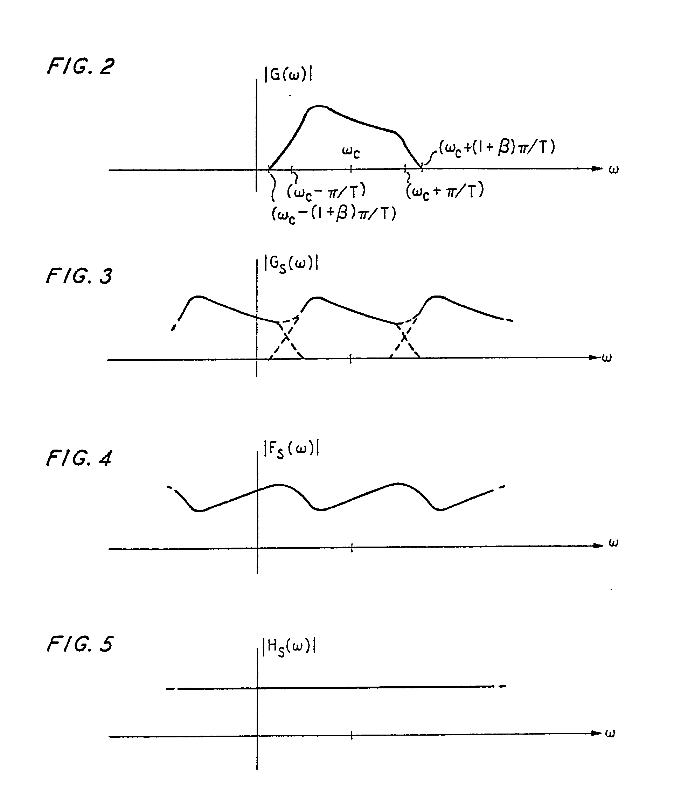

The problem to which the present invention is directed is illustrated in Figs. 2—10. Fig. 2, in particular, shows the positive frequency portion of the magnitude $|G(\omega)|$ of the transfer function of a typical voiceband telephone transmission channel. In this discussion, the "transmission channel" is assumed to include the transmitter, the transmission medium and all receiver circuitry to and including the receiver phase splitter. The negative frequency portion of $|G(\omega)|$ need not be considered since the complex signal $Q''(t)$ at the output of phase splitter 14 is "analytic," i.e., has no negative frequencies. The radian carrier frequency of the QAM signal to be transmitted is $\omega_c$. The transmission channel extends from

$$(\omega_c - (1+\beta)\pi/T)$$

to

$$(\omega_c + (1+\beta)\pi/T)$$

rad/sec, meaning that within that band the gain provided by the channel is at least some predetermined minimum, e.g., $-40$ db. Outside that band, the gain is less than that minimum and is presumed to be zero. The parameter $\beta$ is the so-called percent roll-off and has a value between zero and unity given by

$$\beta = (\omega_{co}T/\pi - 1)$$

where the frequency $(\omega_c + \omega_{co})$ is the upper frequency limit of the transmission channel.

The transfer function $G_s(\omega)$ of the "sampled channel," defined as the combination of the transmission channel with all receiver circuitry up to and including the sampler, i.e., a/d converter 17, is arrived at by a "folding" operation to yield

$$G_c(\omega) = \sum_{n=-\infty}^{\infty} G(\omega - 2\pi np/T).$$

It is thus seen that the sampled channel transfer function is a superposition in the frequency domain of repetitions of the unsampled transfer function translated in frequency by multiples of $2\pi p/T$.

For baud equalization, of course, $p=1$. As shown in Fig. 3, $|G_s(\omega)|$ for this case is non-zero for all $\omega$ because the tails (shown in dotted line) of each translated $G(\omega)$ overlap and add with those of adjacent translated $G(\omega)$'s. A baud equalizer is properly equalized when the equalized channel transfer function, i.e., the overall transfer function of the sampled channel-plus-equalizer combination, has constant gain (and linear phase characteristic) at all frequencies. The magnitude $|H_s(\omega)|$ of an ideal such transfer function for a baud sampled receiver is shown in Fig. 5. Thus, for any given channel, there is a unique, optimum equalizer transfer function—corresponding to a unique ensemble of tap coefficient values—which provides the best equalization, i.e., the smallest mean-squared error for baud sampling. The magnitude $|F_s(\omega)|$ of that optimum equalizer transfer function for the channel under consideration is shown in Fig. 4.

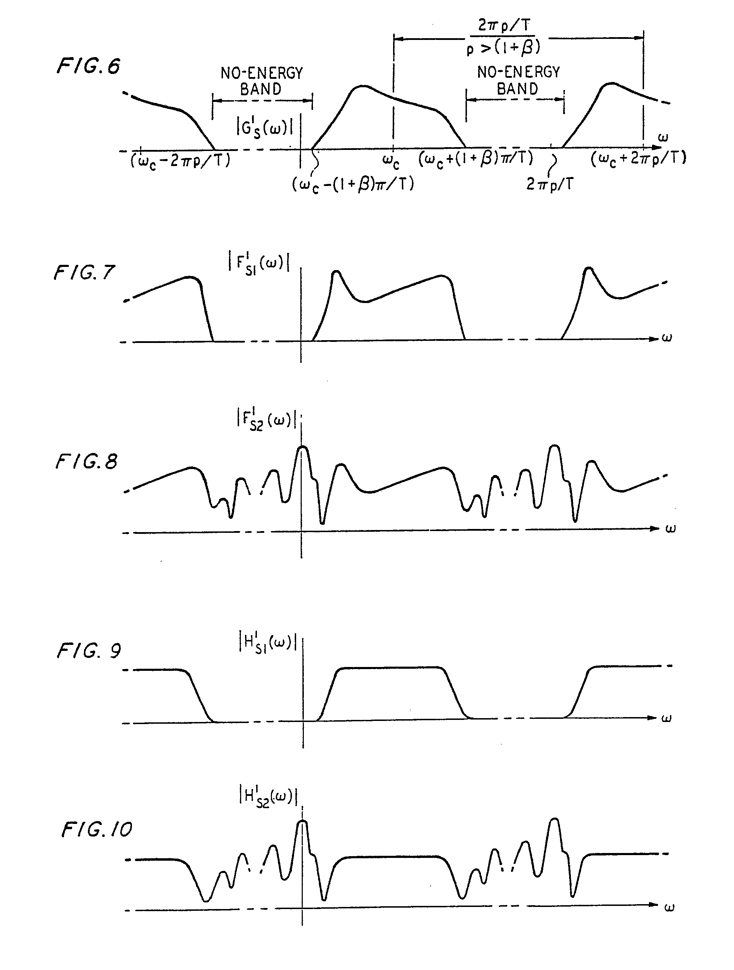

For fractionally spaced equalization, by contrast, $p>(1+\beta)$ so that the tails of adjacent repetitions of $|G(\omega)|$ do not overlap. They are, rather, separated by what may be referred to as "no-energy bands." This is illustrated in Fig. 6 which shows the transfer function magnitude $|G_s'(\omega)|$ of $G(\omega)$ sampled at $p/T$ samples per second, $p>(1+\beta)$.

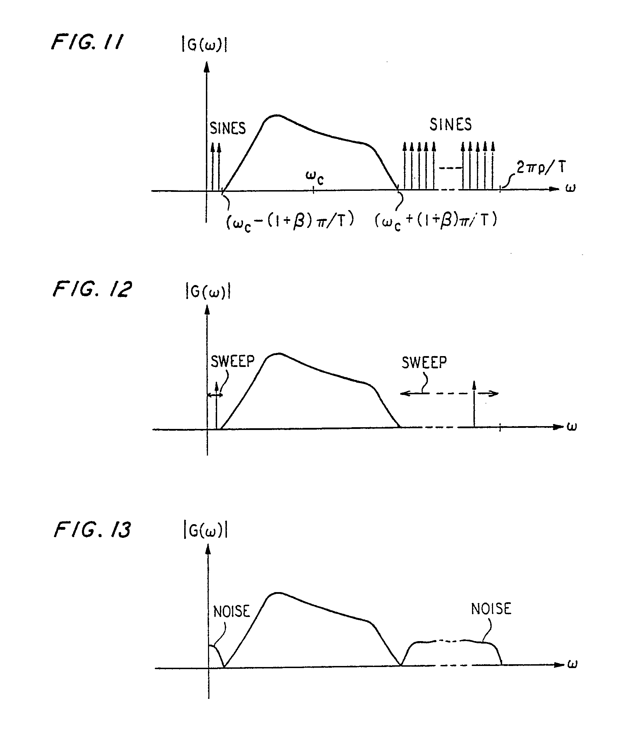

A consequence of the nonoverlapping of the repetitions of $G(\omega)$ is that a number of fractionally spaced equalizer transfer functions—each corresponding to a different coefficient ensemble—provide substantially the same, minimum mean-squared error. The magnitudes of two such equalizer transfer functions $|F_{s1}'(\omega)|$ $|F_{s2}'(\omega)|$ are shown in Figs. 7 and 8, respectively. The magnitudes $|H_{s1}'(\omega)|$ $|H_{s2}'(\omega)|$ of the resulting equalized channel transfer functions are shown in Figs. 9 and 10. From the standpoint of minimizing the mean-squared error, the equalizer transfer functions of Figs. 7 and 8 are equivalent; since there is no signal energy in the no-energy bands, the fact that $|H_{s2}'(\omega)|$ is non-zero in these bands, is irrelevant—at least in theory.

There is a problem, however, as there is no unique optimum equalizer transfer function. Thus, as the tap coefficient values are updated over time, small biases in the coefficient updating processing hardware—such as biases associated with signal value round-off—can cause at least some of the coefficient values to drift. This corresponds to a drift in the equalizer transfer function. For example, the transfer function of Fig. 7 may be the one which exists right after equalizer start-up, but may drift to that of Fig. 8 after, say, five minutes. Ultimately, some of the coefficient values may drift to such large levels that the registers used to store the coefficients or other signals generated during normal equalizer operation can then overflow, causing severe degradation, or total collapse, of the system response.

Unlike the tap leakage arrangements, which represent time domain approaches to the coefficient drift problem, the present invention fights the coefficient drift in the frequency domain. In the present invention, energy is provided in the sampled signal in the no-energy bands. That is, the added energy is at frequencies at which the sampled channel transfer function has substantially zero gain.

The presence of added energy in the no-energy bands means that if the coefficient values now start to drift, causing the gain of the equalizer transfer function to increase in the no-energy bands, the contribution of the added energy to the mean-squared error will be non-negligible. The coefficient updating algorithm responds by adjusting the coefficients so as to minimize the error. In so doing, it forces the equalizer to have a unique transfer function, one which, like the transfer function of Fig. 7, has substantially zero gain in the no-energy bands. Since a unique transfer function implies a unique set of coefficient values, the coefficient drift problem is substantially eliminated.

Providing the sampled signal with the added energy may be accomplished by introducing a signal in digital form at the output of the a/d converter. Alternatively, as in the present iillustrative embodiment, the signal may be introduced in analog form ahead of the a/d converter. In the latter case, the signal need have energy only in the no-energy bands within the range $(0—2\pi p/T)$ rad/sec, i.e, at frequencies at which the transfer function of the transmission channel has substantially zero gain. This is because the folding which occurs upon sampling results in energy being added to the sampled signal in each no-energy band of the sampled channel transfer function, as desired, not just within the range $(0—2\pi p/T)$. In a system in which the sampler input is an analytic signal, as in the present illustrative embodiment, energy is added in at least one of the frequency bands

$$(0 \text{ to } (\omega_c(1+\beta)\ \pi/T))$$

and

$$((\omega_c+(1+\beta)\ \pi/T)\ \text{to}\ 2\pi p/T)\ \text{rad/sec}.$$

where the sampler input is not analytic, but is real, energy is added in at least one of the frequency bands

$$(0 \text{ to } (\omega_c—(1+\beta)\ \pi/T))$$

and

$$((\omega_c+(1+\beta)\ \pi/T)\ \text{to}\ \pi p/T)\ \text{rad/sec}.$$

In receiver 10, in particular, the above-discussed added signal energy, denominated n(t), is illustratively provided in analog form from out-of-band signal generator 18. Signal n(t) is added to signal q(t) via adder 13 to generate signal q'(t).

The amplitude of signal n(t) should be sufficiently large to provide the necessary amount of coefficient drift control. An amplitude of 10—15 db below the amplitude of the AGC output signal has been found to be appropriate.

The spectrum of signal n(t) may take any of several forms. For example, as shown in Fig. 11, signal (t) may comprise a sum of sinusoids, each having a selected frequency. The frequency gap between adjacent sinusoids should be fairly small. Otherwise, the equalizer will generate zeros on the frequency axis where the sinusoids are located, but it will be unable to compensate for the build-up of gain between the zeros. In an actual embodiment of the invention having $\omega_c=2\pi.1800$, p=6, and T=1/1600, a spacing of 150 Hz between adjacent sinusoids was found to be adequate.

Alternatively, as shown in Fig. 12, signal n(t) may comprise one or more sweeping sinusoids, i.e., sinusoids whose frequencies are varied in a predetermined manner. In many applications this will be the simplest to implement. With $\omega_c$, p and T having the values indicated above, a sweeping frequency of 10 Hz was found to be effective.

Alternatively, signal n(t) may comprise random noise as shown in Fig. 13. In this case, however, special care must be taken to ensure that the sum of the AGC output and n(t) does not exceed the dynamic range of the subsequent circuitry.

As mentioned above, the additive signal may be introduced in digital form at the a/d converter output. In this regard, it should be noted that if the radian frequency $2\pi p/T$ happens to fall within a no-energy band, a sinusoid of amplitude A can be introduced at that frequency by adding the quantity A to the real component $q_k$ of each equalizer input sample.

The foregoing merely illustrates the present invention. For example, in some applications coefficient drift may be satisfactorily eliminated without adding energy in narrow no-energy bands, e.g., the band

$$(0 \text{ to } (\omega_c—(1+\beta)\ \pi/T)).$$

## Claims

1. Apparatus for processing a data signal received over a band-limited transmission channel and representing a succession of data signal values occurring at T second intervals, the apparatus including means (17, 19) for forming a sampled signal comprising a succession of samples occurring at a predetermined rate of p/T samples per second, p>1, the sampled signal including energy derived from the received data signal distributed in a plurality of frequency bands, means (22) for equalizing the sampled signal, means (31) for recovering the data signal values from the output of the equalizing means, and means (23) for repetitively updating the response of the equalizing means, and characterized in that means (13, 18) are provided for introducing another signal to provide in the sampled signal energy at frequencies intermediate the said frequency bands to reduce coefficient drift in the equalizing means.

2. Apparatus as claimed in claim 1 wherein the data signal has a percent rolloff $\beta$, and p>(1+$\beta$).

3. Apparatus as claimed in claim 2 wherein the equalizing means serves to operate during successive T second intervals to form respective equalizer outputs each equal to the sum of the products of a plurality of coefficients with a plurality of the samples, the recovering means is responsive to at least some of the equalizer outputs to form decisions as to respective data signal values and to form corresponding error signals, and the updating means is responsive to at least some of the error signals to update the values of the coefficients.

4. Apparatus as claimed in claim 3 wherein the updating means serves to update the values of the coefficients so as to minimise the average of the value of the squares of those of the error signals to which the updating means is responsive.

5. Apparatus as claimed in claim 1, 2, 3 or 4 wherein the additional energy comprises a plurality of sinusoids, each having a selected frequency.

6. Apparatus as claimed in claim 1, 2, 3 or 4 wherein the additional energy comprises at least one sinusoid, the frequency of which is varied in a predetermined manner.

7. Apparatus as claimed in claim 1, 2, 3 or 4 wherein the additional energy comprises noise frequency.

8. A method of processing a data signal received over a band-limited transmission channel and representing a succession of data signal values occurring at T second intervals, the method including

(i) forming a sampled signal comprising a succession of samples occurring at a predetermined rate of p/T samples per second, p>1, the sampled signal including energy derived from the received data signal distributed in a plurality of frequency bands,

(ii) equalizing the sampled signal in an equalizer (22),

(iii) recovering the data signal values from the equalized sampled signal, and

(iv) repetitively updating the response of the equalizer, and characterized in that another signal is introduced to provide in the sampled signal energy at frequencies intermediate the said frequency bands to reduce coefficient drift in the equalizer.

9. A method as claimed in claim 8 wherein the data signal has a percent rolloff $\beta$, and p>(1+$\beta$).

10. A method as claimed in claim 9 wherein (ii) includes forming during successive T second intervals respective equalizer outputs each equal to the sum of the products of a plurality of coefficients with a plurality of the samples, (iii) includes forming in response to at least some of the equalizer outputs a) decisions as to respective data signal values and b) corresponding error signals, and (iv) includes updating the values of the coefficients in response to at least some of the error signals.

11. A method as claimed in claim 10 wherein (iv) includes updating the values of the coefficients so as to minimise the average of the value of the squares of those of the error signals in response to which the updating occurs.

12. A method as claimed in claim 8, 9, 10 or 11 wherein the additional energy comprises a plurality of sinusoids, each having a selected frequency.

13. A method as claimed in claim 8, 9, 10 or 11 wherein the additional energy comprises at least one sinusoid, the frequency of which is varied in a predetermined manner.

14. A method as claimed in claim 8, 9, 10 or 11 wherein the additional energy comprises noise energy.

**Revendications**

1. Dispositif denstiné à traiter un signal de données reçu par un canal de transmission à bande limitée et représentant une succession de valeurs de signal de données apparaissant à des intervalles de T secondes, le dispositif comprenant des moyens (17, 19) destinés à former un signal échantillonné consistant en une succession d'échantillons qui apparaissent à une cadence prédéterminée de p/T échantillons par seconde, avec p>1, le signal échantillonné contenant de l'énergie déduite du signal de données reçu qui est répartie dans un ensemble de bandes de fréquence, des moyens (22) destinés à égaliser le signal échantillonné, des moyens (31) destinés à récupérer les valeurs de signal de données à partir du signal de sortie des moyens d'égalisation, et des moyens (23) destinés à mettre à jour de façon répétitive la réponse dex moyens d'égalisation, et caractérisé en ce qu'il comprend des moyens (13, 18) destinés à introduire un autre signal pour produire dans le signal échantillonné de l'énergie à des fréquences situées entre lesdites bandes de fréquence, dans le but de réduire la dérive des coefficients dans les moyens d'égalisation.

2. Dispositif selon la revendication 1, dans lequel le signal de données a une atténuation relative $\beta$, et p>(1+$\beta$).

3. Dispositif selon la revendication 2, dans lequel les moyens d'égalisation fonctionnent pendant des intervalles successifs de T secondes de façon à former des signaux de sortie d'égaliseur respectifs, chacun d'eux étant égal à la somme des produits d'un ensemble de coefficients et d'un ensemble des échantillons, les moyens de récupération réagissent à certains au moins des signaux de sortie d'égaliseur en formant des décisions concernant des valeurs de signal de données respectives, et en formant des signaux d'erreur correspondants, et les moyens de mise à jour réagissent à certains au moins de signaux d'erreur en mettant à jour les valeurs de coefficients.

4. Dispositif selon la revendication 3, dans lequel les moyens de mise à jour mettent à jour les valeurs des coefficients de façon à minimiser la moyenne de la valeur des carrés de ceux des signaux d'erreur auxquels les moyens de mise à jour réagissent.

5. Dispositif selon la revendication 1, 2, 3 ou 4, dans lequel l'énergie supplémentaire consiste en un ensemble de sinusoïdes, chacune d'elles ayant une fréquence sélectionnée.

6. Dispositif selon la revendication 1, 2, 3 ou 4, dans lequel l'énergie supplémentaire consiste en au moins une sinusoïde dont on fait varier la fréquence d'un manière prédéterminée.

7. Dispositif selon la revendication 1, 2 3 ou 4, dans lequel l'énergie supplémentaire consiste en énergie de bruit.

8. Un procédé de traitement d'un signal de données reçu par un canal de transmission à bande limitée et représentant une succession de valeurs de signal de données apparaissent à des intervalles de T secondes, le procédé comprenant les opérations suivantes:

(i) on forme un signal échantillonné consistant en une succession d'échantillons qui apparaissent à une cadence prédéterminée de p/T échantillons par seconde, avec p>1, le signal échantillonné comprenant de l'énergie déduite de signal de données reçu qui est répartie dans un ensemble de bandes de fréquence,

(ii) on égalise le signal échantillonné dans un égaliseur (22),

(iii) on récupère les valeurs de signal de données à partir du signal échantillonné et égalisé, et

(iv) on met à jour la réponse de l'égaliseur de façon répétitive, et caractérisé en ce qu'on introduit un autre signal pour produire dans le signal échantillonné de l'énergie à des fréquences situées entre lesdites bandes de fréquence, pour réduire la dérive des coefficients dans l'égaliseur.

9. Un procédé selon la revendication 8, dans lequel le signal de données a une atténuation relative $\beta$, et $p>(1+\beta)$.

10. Un procédé selon la revendication 9, dans lequel l'opération (ii) comprend la formation pendant des intervalles successifs de T secondes des signaux de sortie d'égaliseur respectifs, chacun d'eux étant égal à la somme des produits d'un ensemble de coefficients et d'un ensemble des échantillons, l'operation (iii) comprend la formation, sous la dépendance de certains au moins des signaux de sortie d'égaliseur, (a) de décisions concernant des valeurs de signal de données respectives, et (b) de signaux d'erreur correspondants, et l'operation (iv) comprend la mise à jour des valeurs des coefficients sous la dépendance de certains au moins des signaux d'erreur.

11. Un procédé selon la revendication 10, dans lequel l'operation (iv) comprend la mise à jour des valeurs des coefficients de façon à minimiser la moyenne de la valeur des carrés de ceux des signaux d'erreur sous la dépendance desquels la mise à jour est effectuée.

12. Un procédé selon la revendication 8, 9, 10 ou 11, dans lequel l'énergie supplémentaire consiste en un ensemble de sinusoïdes, chacune d'elles ayant une fréquence sélectionnée.

13. Un procédé selon la revendication 8, 9, 10 ou 11, dans lequel l'énergie supplémentaire consiste en au moins une sinusoïde dont on fait varier la fréquence d'une manière prédéterminée.

14. Un procédé selon la revendication 8, 9 10 ou 11, dans lequel l'énergie supplémentaire consiste en énergie de bruit.

## Patentansprüche

1. Vorrichtung zur Verarbeitung eines über einen bandbegrenzten Übertragungskanal empfangen Datensignals, das eine Folge von in Intervallen mit T Sekunden auftretenden Datensignalwerten darstellt, mit einer Einrichtung (17, 19) zur Erzeugung eines Abtastsignals, das eine Folge von mit einer vorbestimmten Rate von p/T Abtastwerten je Sekunde für p>1 aufweist und aus dem empfangenen Datensignal abgeleitete und über eine Vielzahl von Frequenzbändern verteilte Energie enthält, mit einer Einrichtung (22) zur Entzerrung des Abtastsignals, mit einer Einrichtung (31) zur Wiedergewinnung der Datensignalwerte aus dem Ausgangssignal der Entzerrereinrichtung und mit einer Einrichtung (23) zur sich wiederholenden Aktualisierung des Ansprechens der Entzerrereinrichtung, dadurch gekennzeichnet, daß eine Einrichtung (13, 18) vorgesehen ist, die ein weiteres Signal zuführt, um in dem Abtastsignal Energie bei frequenzen zwischen den Frequenzbändern zu erzeugen und damit eine Koeffizientendrift in der Entzerrereinrichtung zu verringern.

2. Vorrichtung nach Anspruch 1, bei der das Datensignal eine Flankensteilheit $\beta$ besitzt und $p>(1+\beta)$.

3. Vorrichtung nach Anspruch 2, bei der die Entzerrereinrichtung während aufeinanderfolgender Intervalle mit T Sekunden entsprechende Entzerrerausgangssignale bildet, die gleich der Summe der Produkte einer Vielzahl von Koeffizienten bei einer Vielzahl der Abtastwerte sind, bei der die Wiedergewinnungseinrichtung Ansprechen auf wenigstens einige der Entzerrerausgangssignale Entscheidungen hinsichtlich der jeweiligen Datensignalwerte und entsprechende Fehlersignale erzeugt und bei der die Aktualisierungseinrichtung unter Ansprechen auf wenigstens einige der Fehlersignale fie Werte der Koeffizienten auf den neuesten Stand bringt.

4. Vorrichtung nach Anspruch 3, bei der die Aktualisierungseinrichtung die Werte der Koeffizienten so auf den neuesten Stand bringt, daß der Mittelwert für die Quadrate derjenigen Fehlersignale, auf die die Aktualisierungseinrichtung anspricht, ein Minimum wird.

5. Vorrichtung nach Anspruch 1, 2, 3 oder 4, bei der die zusätzliche Energie eine Vielzahl von Sinusschwingungen umfaßt, die je eine gewählte Frequenz besitzen.

6. Vorrichtung nach Anspruch 1, 2, 3 oder 4, bei der die zusätzliche Energie wenigstens eine Sinusschwingung umfaßt, deren Frequenz auf vorbestimmte Weise verändert wird.

7. Vorrichtung nach Anspruch 1, 2, 3 oder 4, bei der die zusätzliche Energie Rauschenergie umfaßt.

8. Verfahren zur Verarbeitung eines über einen bandbegrenzten Übertragungskanal empfangenen Datensignals, das eine Folge von in Intervallen mit T Sekunden auftretenden Datensignalwerten darstellt, mit den Verfahrens schritten:

(i) Erzeugen eines Abtastsignals, das eine Folge von mit einer vorbestimmten Rate von p/T Abtastwerten je Sekunde für p>1 auftretenden Abtastwerten aufweist und aus dem empfangenen Datensignal abgeleitete und über eine Vielzahl von Frequenzbändern verteilte Energie enthält;

(ii) Entzerrung des Abtastsignals in einem Entzerrer (22);

(iii) Wiedergewinnen der Datensignalwerte aus dem entzerrten Abtastsignal; und

(iv) sich wiederholendes Aktualisieren des Ansprechens des Entzerrers; dadurch gekennzeichnat, daß ein weiters Signal eingeführt wird, um in dem Abtastsignal Energie bei Frequenzen zwischen den Frequenzbändern zu erzeugen und damit eine Koeffizientendrift im Entzerrer zu verringern.

9. Verfahren nach Anspruch 8, bei dem das Datensignal eine Flankensteilheit $\beta$ besitzt und $p>(1+\beta)$ ist.

10. Verfahren nach Anspruch 9, bei dem der Verfahrensschritt (ii) während aufeinanderfolgender Intervalle von T Sekunden die Bildung entsprechender Entzerrerausgangssignale vorsieht, die je gleich der Summe der Produkt

einer Vielzahl von Koeffizienten bei einer Vielzahl der Abtastwerte vorsieht, der Verfahrensschritt (iii) unter Ansprechen auf wenigstens einige der Entzerrerausgangssignale die Bildung von a) Entscheidungen hinsichtlich der jeweiligen Datensignalwerte und b) entsprechender Fehlersignale beinhaltet, und der Verfahrensschritt (iv) die Aktualisierung der Koeffizientenwerte unter Ansprechen auf wenigstens einige der Fehlersignale vorsieht.

11. Verfahren nach Anspruch 10, bei dem der Verfahrensschritt (iv) die Aktualisierung der Koeffizientenwerte beinhaltet, derart, daß der Mittelwert für die Quadrate derjenigen Fehlersignale ein Minimum wird, unter Ansprechen auf welche die Aktualisierung erfolgt.

12. Verfahren nach Anspruch 8, 9, 10 oder 11, bei dem die zusätzliche Energie eine Vielzahl von Sinusschwingungen umfaßt, die je eine gewählte Frequenz besitzen.

13. Verfahren nach Anspruch 8, 9, 10 oder 11, bei dem die zusätzliche Energie wenigstens eine Sinusschwingung umfaßt, deren Frequenz auf vorbestimmte Weise verändert wird.

14. Verfahren nach Anspruch 8, 9, 10 oder 11, bei dem die zusätzliche Energie Rauschenergie umfaßt.

*FIG. 1*

FIG. 2

$|G(\omega)|$

$\omega_c$

$(\omega_c + (1+\beta)\pi/T)$

$(\omega_c - \pi/T)$

$(\omega_c + \pi/T)$

$(\omega_c - (1+\beta)\pi/T)$

$\omega$

FIG. 3

$|G_S(\omega)|$

$\omega$

FIG. 4

$|F_S(\omega)|$

$\omega$

FIG. 5

$|H_S(\omega)|$

$\omega$

FIG.6

FIG.7

FIG.8

FIG. 9

FIG.10

3

0 040 217

*FIG. 11*   $|G(\omega)|$

SINES    SINES

$\omega_c$

$2\pi p/T$

$\omega$

$(\omega_c - (1+\beta)\pi/T)$    $(\omega_c + (1+\beta)\pi/T)$

*FIG. 12*   $|G(\omega)|$

SWEEP    SWEEP

$\omega$

*FIG. 13*   $|G(\omega)|$

NOISE    NOISE

$\omega$

4